# EUROPEAN PATENT SPECIFICATION

(11) **EP 4 015 579 B1**
(45) Date of publication and mention of the grant of the patent: **29.01.2025**
(21) Application number: 20214748.4
(22) Date of filing: 16.12.2020
(51) Int. Cl.: C08L 69/00

(54) **POLYCARBONATE COPOLYMER FORMULATION WITH IMPROVED HEAT, EXCELLENT IMPACT AND FLAME RETARDANT PERFORMANCE**
POLYCARBONAT-COPOLYMER-FORMULIERUNG MIT VERBESSERTEN HITZE-, AUSGEZEICHNETEN SCHLAG- UND FLAMMSCHUTZEIGENSCHAFTEN
FORMULATION DE COPOLYMÈRE DE POLYCARBONATE PRÉSENTANT DES PERFORMANCES AMÉLIORÉES FACE À LA CHALEUR ET D'EXCELLENTES PERFORMANCES D'IMPACT ET IGNIFUGES

(43) Date of publication of application: 22.06.2022
(73) Proprietor: SHPP Global Technologies B.V., 4612 PX Bergen op Zoom (NL)
(72) Inventor: Zhao, Wei, Mount Vernon, IN 47620-9367 (US); Tosomboon, Monchai, Selkirk, NY 12158 (US); Zhou, Hao, Mount Vernon, IN 47620-9367 (US)
(74) Representative: Balder IP Law, S.L.

(56) References cited:
- WO-A1-2019/123029
- US-A1- 2020 216 663

## Description

### BACKGROUND

This disclosure relates to polycarbonate compositions, and in particular to impact resistant high-heat polycarbonate compositions, methods of manufacture, and uses thereof.

Polycarbonates are useful in the manufacture of articles and components for a wide range of applications, from automotive parts to electronic appliances. Because of their broad use, particularly in electronic components such as chargers, it is desirable to provide polycarbonates with improved flame retardance. US 2020/216663 A1 discloses polycarbonate compositions comprising high-heat copolycarbonate, bisphenol A homopolycarbonate, poly(carbonatesiloxane), and a sulfonate flame retardant.

There accordingly remains a need in the art for impact resistant high-heat polycarbonate compositions that have improved flame retardance. It would be a further advantage if the compositions had improved low-temperature impact resistance.

### SUMMARY

The above-described and other deficiencies of the art are met by a polycarbonate composition comprising: a high-heat copolycarbonate derived from a high-heat bisphenol monomer and optionally a low heat bisphenol A monomer, wherein the high-heat bisphenol monomer is a monomer where the corresponding homopolycarbonate of the monomer has a glass transition temperature of 155 °C or higher as determined per ASTM D3418 with a 20 °C per minute heating rate; a poly(carbonate-siloxane) having 30-70 wt% siloxane content, based on the total weight of the poly(carbonate-siloxane); a homopolycarbonate; a flame retardant, wherein the flame retardant is not a phosphorous-containing flame retardant; and optionally, an additive composition, wherein a molded sample having a thickness of 3.2 millimeters has a notched Izod Impact of at least 300 joules per meter at -30 °C according to ASTM D 526.

In another aspect, a method of manufacture comprises combining the above-described components to form a polycarbonate composition.

In yet another aspect, an article comprises the above-described polycarbonate composition.

In still another aspect, a method of manufacture of an article comprises molding, extruding, or shaping the above-described polycarbonate composition into an article.

The above described and other features are exemplified by the following detailed description, examples, and claims.

### DETAILED DESCRIPTION

The inventors hereof have discovered a polycarbonate composition having a combination of low-temperature impact resistance, thermal resistance, and flame retardance. The polycarbonate compositions include a high-heat copolycarbonate derived from a high-heat bisphenol monomer and optionally a low heat bisphenol A monomer; a poly(carbonate-siloxane) having 30-70 wt% siloxane content, based on the total weight of the poly(carbonate-siloxane); a homopolycarbonate; a flame retardant, wherein the flame retardant is not a phosphorous-containing flame retardant; and optionally, an additive composition. Surprisingly and unexpectedly, although the siloxane content based on the total weight of the composition was the same, superior low-temperature impact performance was observed for compositions that include poly(carbonate-siloxane) having 30-70 wt% siloxane content as compared with compositions that include poly(carbonate-siloxane)s with lower siloxane content (e.g., less than 30 wt% siloxane). Advantageously, for polycarbonate compositions wherein the high-heat polycarbonate was derived from 2-phenyl-3,3'-bis(4-hydroxyphenyl) phthalimidine can provide the desired combination of properties, for example, a UL-94 flame test rating of V0 at a thickness of 1.5 millimeter (mm) and superior thermal and low-temperature impact properties, as compared to a compositions wherein the high-heat polycarbonate was derived from 1,1-bis(4-hydroxyphenyl)-3,3,5-trimethyl-cyclohexane.

The individual components of the polycarbonate compositions are described in further detail below.

"Polycarbonate" as used herein means a polymer having repeating structural carbonate units of formula (1) 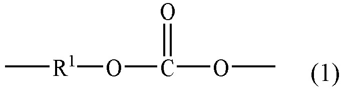 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 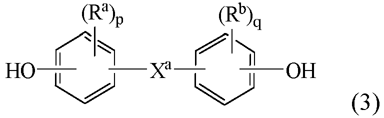 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group can be cyclic or acyclic, aromatic or non-aromatic, and can further comprise heteroatoms such as halogens, oxygen, nitrogen, sulfur, silicon, or phosphorous. The ₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

The polycarbonates in the polycarbonate compositions include a homopolycarbonate (wherein each R¹ in the polymer is the same), a high-heat polycarbonate, and a poly(carbonate-siloxane). In an aspect, he homopolycarbonate in the polycarbonate composition is derived from a bisphenol of formula (2), preferably bisphenol A, in which each of A¹ and A² is p-phenylene and Y¹ is isopropylidene in formula (2). The homopolycarbonate may have an intrinsic viscosity, as determined in chloroform at 25°C, of 0.3-1.5 deciliters per gram (dl/gm), preferably 0.45-1.0 dl/gm. The homopolycarbonate may have a weight average molecular weight (Mw) of 10,000-200,000 grams per mol (g/mol), preferably 20,000-100,000 g/mol, as measured by gel permeation chromatography (GPC), using a crosslinked styrenedivinylbenzene column and polystyrene standards calculated for polycarbonate. GPC samples are prepared at a concentration of 1 mg per ml and are eluted at a flow rate of 1.5 ml per minute. As used herein, "using polystyrene standards and calculated for polycarbonate" refers to measurement of the retention time by GPC, fitting the retention time value to a curve for polystyrene and calculating the molecular weight for polycarbonate. In some aspects, the homopolycarbonate is a bisphenol A homopolycarbonate having an Mw of 18,000-35,000 grams/mole, preferably 20,000-25,000 g/mol; or a bisphenol A homopolycarbonate having a weight average molecular weight of 25,000-35,000 g/mol, preferably 27,000-32,000 g/mol; or a combination thereof, each as measured as described above.

The homopolycarbonate may be present, for example, from 30-70 wt%, 30-65 wt%, 35-70 wt%, 35-60 wt%, 40-65 wt%, or 40-60 wt% each based on the total weight of the composition.

The polycarbonate compositions include a high-heat polycarbonate, which as used herein means a polycarbonate having a glass transition temperature (Tg) of 170 °C or higher, determined per ASTM D3418 with a 20 °C/min heating rate. The high-heat polycarbonate includes a high-heat carbonate group, optionally together with a low heat carbonate group. A combination of different high-heat groups or low heat groups can be used.

The low heat carbonate group can be derived from bisphenols of formula (2) as described above wherein X^{a} is a C₁₋₁₈ bridging group.

The low heat bisphenol group can be of formula (3) 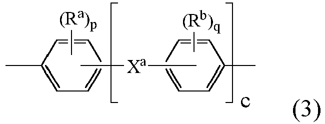 wherein R^{a} and R^{b} are each independently a halogen, C₁₋₃ alkoxy, or C₁₋₃ alkyl, c is 0 to 4, and p and q are each independently integers of 0 or 1. In an aspect, p and q is each 0, or p and q is each 1 and R^{a} and R^{b} are each a methyl, disposed meta to the hydroxy group on each arylene group. X^{a} in formula (3) is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₆ organic group, which can be cyclic or acyclic, aromatic or non-aromatic, and can further comprise heteroatoms such as halogens, oxygen, nitrogen, sulfur, silicon, or phosphorous. For example, X^{a} can be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used in the manufacture of the low heat monomer units are described, for example, in WO 2013/175448 A1, US 2014/0295363, and WO 2014/072923.

In an aspect, the low heat monomer is bisphenol A, which provides the low heat group of formula (3a).

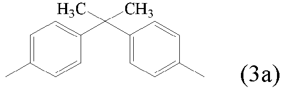

The high-heat bisphenol group is derived from a high-heat bisphenol monomer having at least 19 carbon atoms. As used herein, a high-heat bisphenol monomer is a monomer where the corresponding homopolycarbonate of the monomer has a glass transition temperature (Tg) of 155 °C or higher.

Examples of such high-heat bisphenol groups include groups of formulas (4) to (10) 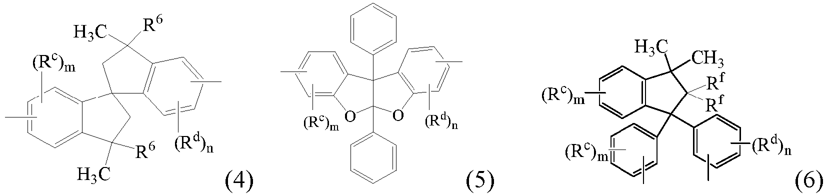 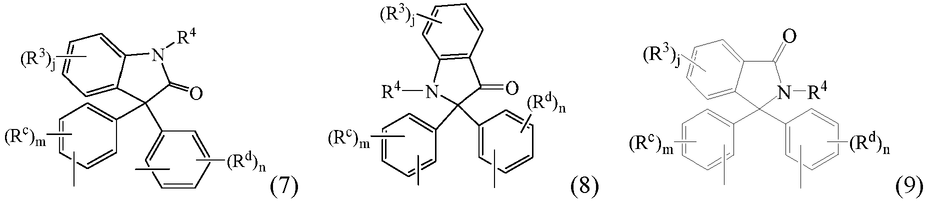 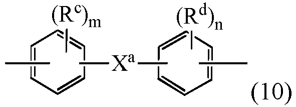 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1 to 5 C₁₋₆ alkyl groups, R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, - C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q^{a})ₓ-G-(Q^{b})_{y}- group, wherein Q^{a} and Q^{b} are each independently a C₁₋₃ alkylene, G is a C₃₋₁₀ cycloalkylene, x is 0 or 1, and y is 0 or 1, and j, m, and n are each independently 0 to 4. A combination of high-heat bisphenol groups can be used.

In an aspect, R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}-group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high-heat bisphenol groups include those of formulas (9a) and (10a) to (10k) 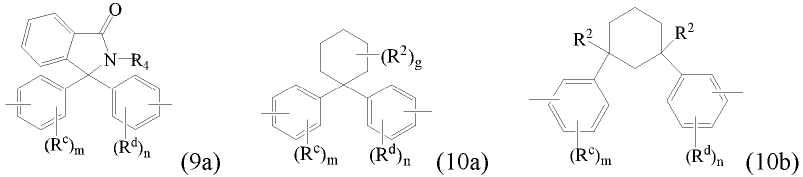 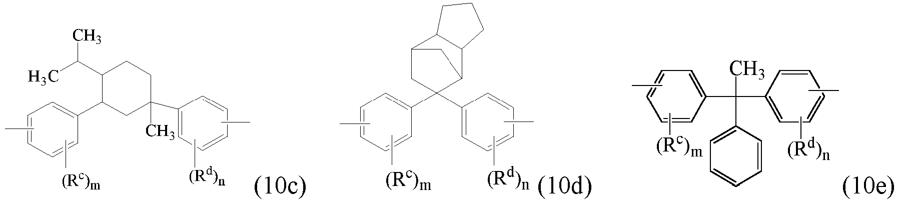 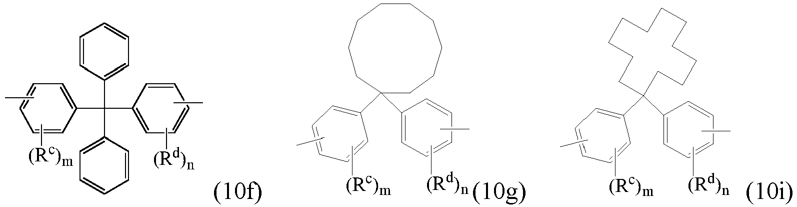 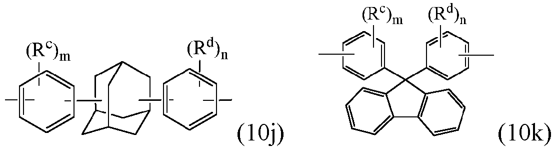 wherein R^{c} and R^{d} are the same as defined for formulas (4) to (10), each R² is independently C₁₋₄ alkyl, m and n are each independently 0 to 4, each R³ is independently C₁₋₄ alkyl or hydrogen, R⁴ is C₁₋₆ alkyl or phenyl optionally substituted with 1 to 5 C₁₋₆ alkyl groups, and g is 0 to 10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high-heat bisphenol group is preferably of formula (9a-2) or (10a-2) 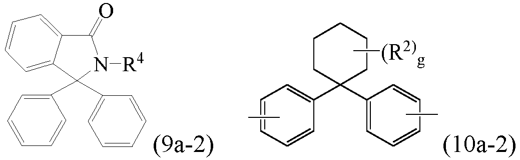 wherein R⁴ is methyl or phenyl, each R² is methyl, and g is 1 to 4. Preferably, the high-heat bisphenol group is derived from 2-phenyl-3,3'-bis(4-hydroxyphenyl) phthalimidine (PPPBP) or from 1,1-bis(4-hydroxyphenyl)-3,3,5-trimethyl-cyclohexane (BP-TMC). 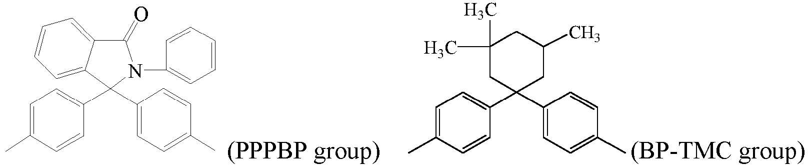 As discussed above, in compositions including a poly(carbonate-siloxane) having 30-70 wt% siloxane content, a homopolycarbonate, and the same flame retardants, polycarbonate compositions wherein the high-heat polycarbonate was derived from 2-phenyl-3,3'-bis(4-hydroxyphenyl) phthalimidine provided the desired combination of properties, a UL-94 flame test rating of V0 at a thickness of 1.5 millimeter (mm) and superior thermal and low-temperature impact properties, as compared to compositions wherein the high-heat polycarbonate was derived from 1,1-bis(4-hydroxyphenyl)-3,3,5-trimethyl-cyclohexane. In some aspects, the high-heat polycarbonate is derived from N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, and optionally, 1,1-bis(4-hydroxyphenyl)-3,3,5-trimethylcyclohexane. In certain aspects, the high-heat polycarbonate is derived from N-phenyl phenolphthalein bisphenol and 1,1-bis(4-hydroxyphenyl)-3,3,5-trimethyl-cyclohexane. In a preferred aspect, the high-heat polycarbonate is derived from N-phenyl phenolphthalein bisphenol. The high-heat polycarbonate may include a single high-heat polycarbonate or a combination of high-heat polycarbonates. In some aspects, the high-heat polycarbonate includes a combination of a high-heat polycarbonate derived from N-phenyl phenolphthalein bisphenol and a high-heat polycarbonate derived from 1,1-bis(4-hydroxyphenyl)-3,3,5-trimethyl-cyclohexane.

The high-heat polycarbonates may be present, for example, from 20-50 wt%, 25-50 wt%, 25-45 wt%, or 20-40 wt%, each based on the total weight of the composition.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %. Combinations comprising linear polycarbonates and branched polycarbonates can be used.

"Polycarbonates" includes homopolycarbonates (wherein each R¹ in the polymer is the same), copolymers comprising different R¹ moieties in the carbonate ("copolycarbonates"), and copolymers comprising carbonate units and other types of polymer units, such as ester units or siloxane units.

In addition to the homopolycarbonate and the high-heat polycarbonate, the polycarbonate compositions include a poly(carbonate-siloxane), also referred to in the art as a polycarbonate-polysiloxane copolymer. The polysiloxane blocks comprise repeating diorganosiloxane units as in formula (10) 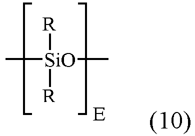 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (11) 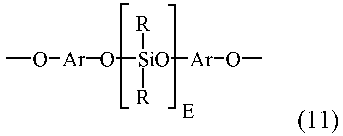 wherein E and R are as defined if formula (10); each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 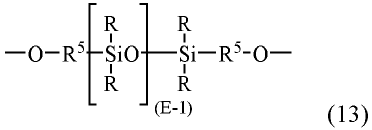 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 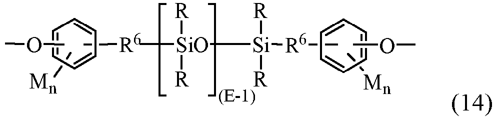 wherein R and E are as defined above. R⁶ in formula (14) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 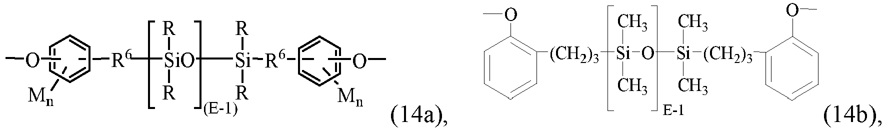 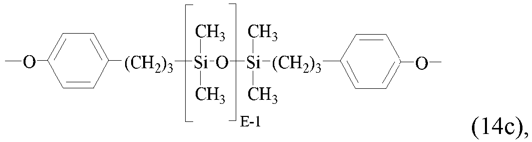 or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane) copolymers.

The polycarbonate compositions include a poly(carbonate-siloxane) having a siloxane content of 30 to 70 wt%, based on the total weight of the poly(carbonate-siloxane). Within this range, the poly(carbonate-siloxane) may have a siloxane content of greater than 30-70 wt%, 35-70 wt%, 35-65 wt%, 35-55 wt%, or 35-50 wt%.

The poly(carbonate-siloxane) having a siloxane content of 30 to 70 wt% may have a weight average molecular weight of 21,000-50,000 g/mol. Within this range, the weight average molecular weight can be 25,000-45,000 g/mol, or 30,000-45,000 g/mol, or 32,000-43,000 g/mol, or 34,000-41,000 g/mol, or 35,000-40,000 g/mol. In an aspect, the poly(carbonate-siloxane)may have a weight average molecular weight of 26,000-45,000 g/mol, or 30,000-45,000 g/mol, or 35,000-40,000 g/mol. The weight average molecular weight may be measured by gel permeation chromatography using a crosslinked styrene-divinyl benzene column, at a sample concentration of 1 milligram per milliliter, using polystyrene standards and calculated for polycarbonate.

The poly(carbonate-siloxane) having a siloxane content of 30 to 70 wt% may be present in amount effective to provide 0.5-20 wt%, 0.5-15 wt%, 0.5-10 wt%, or 1-8 wt% siloxane, each based on the total weight of the composition.

In addition to the poly(carbonate-siloxane) comprising 30 to 70 wt% siloxane units, the compositions may include an auxiliary poly(carbonate-siloxane) copolymer comprising 70 to 98 wt%, more preferably 75 to 97 wt% of carbonate units and 2 to 30 wt%, more preferably 3 to 25 wt% siloxane units. In a preferred aspect, the auxiliary poly(carbonatesiloxane) comprises bisphenol A carbonate units and dimethylsiloxane units, for example blocks containing 5-200 dimethylsiloxane units, such as those commercially available under the trade name EXL from SABIC.

In an aspect, the auxiliary poly(carbonate-siloxane) copolymer comprises 10 wt% or less, preferably 6 wt% or less, and more preferably 4 wt% or less, of the polysiloxane based on the total weight of the auxiliary poly(carbonate-siloxane) copolymer, and are generally optically transparent and are commercially available under the name EXL-T from SABIC. In another aspect, the auxiliary poly(carbonate-siloxane) copolymer comprises 10 wt% or more, preferably 12 wt% or more, and more preferably 14 wt% or more, of the polysiloxane copolymer based on the total weight of the auxiliary poly(carbonate-siloxane) copolymer, are generally optically opaque and are commercially available under the trade name EXL-P from SABIC.

The auxiliary poly(carbonate-siloxane) may have a weight average molecular weight of 18,000-50,000 g/mol, preferably 25,000-40,000 g/mol, more preferably 27,000-32,000 g/mol as measured by gel permeation chromatography using a crosslinked styrene-divinyl benzene column, at a sample concentration of 1 milligram per milliliter, using polystyrene standards and calculated for polycarbonate.

In an aspect, the composition comprises less than or equal to 5 wt% or less than or equal to 1 wt%, or less than or equal to 0.1 wt% of the auxiliary poly(carbonate-siloxane). Preferably the auxiliary poly(carbonate-siloxane) is excluded from the composition.

The poly(carbonate-siloxane)s may have a melt volume flow rate, measured at 300 °C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

The polycarbonate compositions include a flame retardant, wherein the flame retardant is not a phosphorous-containing flame retardant. Inorganic flame retardants can be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆. In some aspects, the flame retardant includes an alkyl sulfonate, an aromatic sulfonate, an aromatic sulfone sulfonate, or a combination thereof. The flame retardant may be present, for example, from 0.01-1 wt%, 0.05-1 wt%, or 0.05-0.5 wt%, each based on the total weight of the composition. In some aspects, the flame retardant is a combination of an alkyl sulfonate salt and an aromatic sulfone sulfonate. In such aspects, the weight ratio of the aromatic sulfone sulfonate to the alkyl sulfonate salt to may be 1:1, 2:1 to 1:2, 3:1 to 1:3, 4:1 to 1:4, 5:1 to 1:5, or 9:1 to 1:9.

In addition to the polycarbonate, the polycarbonate compositions can include various additives ordinarily incorporated into polymer compositions of this type, with the proviso that the additive(s) are selected so as to not significantly adversely affect the desired properties of the thermoplastic composition, in particular impact resistance, heat resistance, and flame test ratings. Such additives can be mixed at a suitable time during the mixing of the components for forming the composition. Additives include processing aids, fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardant different from the flame retardant that is not a phosphorous-containing flame retardant, hydrostabilizers, epoxy resins, and anti-drip agents. A combination of additives can be used, for example a combination of one or more of a hydrostabilizer, an epoxy resin, an anti-drip agent, a processing aid, a heat stabilizer, an ultraviolet light stabilizer, a colorant, an inorganic filler, preferably a clay. In general, the additives are used in the amounts generally known to be effective. For example, the total amount of the additives (other than any impact modifier, filler, or reinforcing agents) can be 0.01 to 10 wt%, or 0.1 to 5 wt%, based on the total weight of the polycarbonate composition.

When present, the additive composition may include an anti-drip agent, an epoxy resin, a UV stabilizer, a hydrostabilizer, or a combination thereof. Anti-drip agents may be present in the additive composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Anti-drip agents can be used in amounts of 0.01-1 wt%, based on the total weight of the composition.

In an aspect, the polycarbonate composition includes 25-50 wt% a high-heat copolycarbonate derived from N-phenyl phenolphthalein bisphenol and bisphenol A; 30-65 wt% of bisphenol A homopolycarbonate; 0.01-1.0 wt% of a combination of an alkyl sulfonate and an aromatic sulfone sulfonate; and optionally, 0.1-10 wt% of the additive composition; wherein the poly(carbonate-siloxane) is present in an amount effective to provide 0.5-20 wt%, preferably 0.5-15 wt%, more preferably 0.5-10 wt% siloxane, each based on the total weight of the composition.

The polycarbonate compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

A molded sample of the polycarbonate composition having a thickness of 3.2 millimeters may have a heat deflection temperature (HDT) of at least 147 °C, or 147 °C -250 °C, or 147 °C -225 °C, 147 °C -200 °C, or 147 °C -175 °C each determined according to ASTM D648 at 0.45 megapascals (MPa).

A molded sample of the polycarbonate composition having a thickness of 3.2 millimeters may have a heat deflection temperature (HDT) of at least 133 °C, or 133 °C -250 °C, or 133 °C-225 °C, 133 °C-200 °C, or 133 °C -175 °C each determined according to ASTM D648 at 1.82 MPa.

A molded sample having a thickness of 3.2 millimeters has a notched Izod impact of at least 300 joules per meter (J/m), or from 300-600 J/m at -30 °C; and may have a notched Izod impact of at least 195 J/m, at least 200 J/m, or from 195-500 J/m, or from 200-500 J/m at -40 °C; or a combination thereof, each according to ASTM D256.

A molded sample of the polycarbonate composition may have a flame test rating of V0, as measured according to UL-94 at a thickness of 1.5 millimeter, V0 at a thickness of 1.2 mm, V1 at a thickness of 1 mm, or a combination thereof.

Shaped, formed, or molded articles comprising the polycarbonate compositions are also provided. The polycarbonate compositions can be molded into useful shaped articles by a variety of methods, such as injection molding, extrusion, rotational molding, blow molding and thermoforming. Some example of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In some aspects, the article is an extruded article, a molded article, pultruded article, a thermoformed article, a foamed article, a layer of a multi-layer article, a substrate for a coated article, or a substrate for a metallized article, preferably wherein the article is a molded article. In a preferred aspect, the article is an electrical connector, for example, a charger for a device.

This disclosure is further illustrated by the following examples, which are nonlimiting.

### EXAMPLES

The following components are used in the examples. Unless specifically indicated otherwise, the amount of each component is in wt%, based on the total weight of the composition.

The materials shown in Table 1 were used.

**Table 1.**

| Component | Description | Source |
|---|---|---|
| PC-Si-40 | Polycarbonate-siloxane copolymer having a siloxane content of 40 wt%, average PDMS block length of 45 units, having a Mw of 37,000 to 38,000 grams per mole as determined by gel permeation chromatography using polystyrene standards and calculated for polycarbonate, produced by interfacial polymerization and endcapped with p-cumylphenol | SABIC |
| PC-Si-20 | Poly(bisphenol A carbonate-dimethylsiloxane) copolymer produced via interfacial polymerization, 20 wt% siloxane, average siloxane block length = 45 units (D45), Mw = 29,000-31,000 g/mol as per GPC using polystyrene standards and calculated for polycarbonate, para-cumylphenol (PCP) end-capped, polydispersity = 2-3 | SABIC |
| PC-1 | Bisphenol A polycarbonate homopolymer, prepared by interfacial process, Mw = 21,000-23,000 g/mol as per GPC using polystyrene standards and calculated for polycarbonate and a melt flow rate of 25-30 grams per 10 min at 300 °C and a 1.2 kilogram load, as determined by ISO 1133. | SABIC |
| PC-2 | Bisphenol A polycarbonate homopolymer, prepared by interfacial process, Mw = 29,000-31,000 g/mol as per GPC using polystyrene standards and calculated for polycarbonate and a melt flow rate of 5-8 grams per 10 min at 300 °C and a 1.2 kilogram load, as determined by ISO 1133. | SABIC |
| HHPC-1 | Poly (N-phenylphenolphthaleinylbisphenol, 2,2-bis(4-hydro) carbonate -cobisphenol A carbonate), 35 mol% PPPBP units, Mw = 25,000 g/mol determined via GPC using polystyrene standards and calculated for polycarbonate, made by interfacial polymerization, PCP end-capped, PDI = 2-3 | SABIC |
| HHPC-2 | Bisphenol A carbonate-co-isophorone bisphenol carbonate, available as APEC | BAYER |
| RIMAR | Potassium perfluorobutane sulfonate, available as FR-2025 | 3M |
| KSS | Potassium diphenylsulfone sulfonate | METROPOLIT AN EXIMCHEM LTD. |
| EPOXY | (3'-4'-Epoxycyclohexane)methyl 3'-4'-epoxycyclohexyl-carboxylate, CAS Reg. No. 2386-87-0, available as Celloxide 2021P | DAICEL |
| CESA | Styrene-acrylate-epoxy oligomer (hydrostabilizer), CAS No. 106-91-2, available as JONCRYL ADR 4368 | BASF |
| UVA | 2-(2H-Benzotriazol-2-yl)-4,6-bis(1-methyl-1-phenylethyl)phenol, available as Tinuvin 234 | BASF |
| TSAN | Encapsulated Polytetrafluoroethylene, CAS Reg. No. 9002-84-0 | SABIC |
| PETS | Pentaerythritol tetrastearate, >90% esterified | FACI |
| Phosphite | Tris(2,4-di-tert-butylphenyl) phosphite, available as IRGAFOS 168 | BASF |
| CB | Carbon Black | |

The testing samples were prepared as described below and the following test methods were used.

Typical compounding procedures are described as follows: All raw materials are pre-blended and then extruded using a twin extruder. The composition was melt-kneaded, extruded, cooled through a water bath and pelletized. A typical extrusion profile is listed in Table 2.

The extruded pellets were molded into testing specimens after drying the extruded pellets at 120 °C for 3 hours using injection molding.

Sample preparation and testing methods are described in Table 2.

**Table 2.**

| Property | Standard | Conditions | Specimen Type |
|---|---|---|---|
| Tensile | ASTM D638 | 23 °C , 3.2 mm | Bar- 57.00*13.00*3.18*166 mm |
| MVR | ASTM D1238-04 | 300 °C, 1.2 kg, 360 sec; | Pellets |
| | | 330 °C, 1.2 kg, 360 sec | |
| HDT | ASTM D648 | 0.45 MPa; | Bar-127mm x 12.7mm x 3.2mm |
| | | 1.82 MPa | |
| Notched Izod | ASTM D256 | 23 °C, -30 °C, and -40 °C | Bar-63.5 mm x 12.7 mm x 3.2 mm |
| Flammability | UL 94 | Vertical Burning | Bar-127 mm x 12.7 mm x 3 mm/1 mm |

Flammability tests were performed on samples at thicknesses of 1.5 mm in accordance with the Underwriter's Laboratory (UL) UL 94 standard. In some cases, a second set of 5 bars was tested to give an indication of the robustness of the rating. In this report the following definitions are used as shown in Table 5. Total flame-out-times for all 5 bars (FOT = t1 + t2) were determined. V-ratings were obtained for every set of 5 bars.

**Table 5**

| | t₁ and/or t₂ | 5-bar FOT | burning drips |
|---|---|---|---|
| V0 | <10 | <50 | no |
| V1 | <30 | <250 | No |
| V2 | <30 | <250 | Yes |
| N.R. (no rating) | >30 | >250 | |

### Examples 1-11

Table 3 shows the compositions and properties for Comparative Examples 1-5 and Examples 6-11.

| Compon ents | Units | 1* | 2* | 3* | 4* | 5* | 6 | 7 | 8 | 9 | 10 | 11 |
|---|---|---|---|---|---|---|---|---|---|---|---|---|
| PC-1 | wt% | 15.00 | 15.00 | 20.26 | 18.86 | 17.46 | 20.26 | 18.86 | 17.46 | 17 | 15.59 | 17.0 |
| PC-2 | wt% | 27.80 | 27.80 | 37.54 | 34.94 | 32.34 | 37.54 | 34.94 | 32.34 | 31.44 | 28.85 | 31.09 |
| HHPC-1 | wt% | 32.92 | 0 | 0 | 0 | 0 | 32.92 | 32.92 | 32.92 | 38.28 | 38.28 | 38.28 |
| HHPC-2 | wt% | 0 | 32.92 | 32.92 | 32.92 | 32.92 | 0 | 0 | 0 | 0 | 0 | 0 |
| PC-Si-40 | wt% | 0 | 0 | 7.00 | 11.00 | 15.00 | 7.00 | 11.00 | 15.00 | 11.00 | 15.00 | 11.0 |
| PC-Si-20 | wt% | 22.0 | 22.0 | 0 | 0 | 0 | 0 | 0 | 0 | 0 | 0 | 0 |
| RIMAR | wt% | 0.08 | 0.08 | 0.08 | 0.08 | 0.08 | 0.08 | 0.08 | 0.08 | 0.08 | 0.08 | 0.08 |
| KSS | wt% | 0.3 | 0.3 | 0.3 | 0.3 | 0.3 | 0.3 | 0.3 | 0.3 | 0.3 | 0.3 | 0.3 |
| PETS | wt% | 0.3 | 0.3 | 0.3 | 0.3 | 0.3 | 0.3 | 0.3 | 0.3 | 0.3 | 0.3 | 0.3 |
| EPOXY | wt% | 0.3 | 0.3 | 0.3 | 0.3 | 0.3 | 0.3 | 0.3 | 0.3 | 0.3 | 0.3 | 0.3 |
| UVA | wt% | 0.3 | 0.3 | 0.3 | 0.3 | 0.3 | 0.3 | 0.3 | 0.3 | 0.3 | 0.3 | 0.3 |
| TSAN | wt% | 0.3 | 0.3 | 0.3 | 0.3 | 0.3 | 0.3 | 0.3 | 0.3 | 0.3 | 0.3 | 0.3 |
| Phosphit e | wt% | 0.05 | 0.05 | 0.05 | 0.05 | 0.05 | 0.05 | 0.05 | 0.05 | 0.05 | 0.05 | 0.05 |
| CESA | wt% | 0.65 | 0.65 | 0.65 | 0.65 | 0.65 | 0.65 | 0.65 | 0.65 | 0.65 | 0.65 | 0.65 |
| CB | wt% | | | | | | | | | | | 0.35 |
| Total | wt% | 100.0 0 | 100.0 0 | 100.0 0 | 100.0 0 | 100.0 0 | 100.0 0 | 100.0 0 | 100.0 0 | 100.0 0 | 100.0 0 | 100.0 0 |
| Siloxane Content | % | 4.4 | 4.4 | 2.8 | 4.4 | 6.0 | 2.8 | 4.4 | 6.0 | 4.4 | 6.0 | 4.4 |
| Total BPA PC | wt% | 42.80 | 42.80 | 57.8 | 53.8 | 49.8 | 57.8 | 53.8 | 49.8 | 48.44 | 44.44 | 48.09 |
| MVR, 300 °C, 1.2 kg | cm³/1 0 min | 5.95 | 4.87 | 5.55 | 4.44 | 3.84 | 6.39 | 5.28 | 4.24 | 5.36 | 4.51 | 7.4 |
| MVR, 330 °C, 1.2 kg | cm³/1 0 min | 21.7 | 16.2 | 18.7 | 15.5 | 13.4 | 22.9 | 18.2 | 13.8 | 19.2 | 17 | 32.1 |
| HDT 0.45 MPa | °C | 147.9 | 149 | 150.3 | 150.1 | 150.6 | 148.8 | 148.5 | 148.8 | 150.9 | 151.5 | 149.2 |
| HDT *1.82* MPa | *°C* | *133.8* | *134.9* | *136.7* | *135.5* | *135.6* | *134.8* | *134.7* | *134.3* | *136.9* | *135.9* | *134.8* |
| UL-94, 1.5 mm | | NR | NR | NR | NR | NR | V0 | V0 | V0 | V0 | V0 | V0 |
| UL-94, 1.2 mm | | | | | | | | | | | | V0 |
| UL-94, 1.0 mm | | | | | | | | | | | | V1 |
| NII, 23 °C | J/m | 590 | 570 | 525 | 588 | 567 | 654 | 620 | 632 | 605 | 566 | 619 |
| Ductility, 23 °C | % | 100 | 100 | 100 | 100 | 100 | 100 | 100 | 100 | 100 | 100 | 100 |
| NII, -30 °C | J/m | 212 | 162 | 122 | 194 | 411 | 199 | 427 | 468 | 341 | 397 | 389 |
| Ductility, -30 °C | % | 0 | 0 | 0 | 0 | 0 | 0 | 0 | 0 | 0 | 0 | 0 |
| NII, -40 °C | J/m | 183 | 155 | 117 | 151 | 269 | 198 | 289 | 400 | 242 | 352 | 307 |
| Ductility, -40 °C | % | 0 | 0 | 0 | 0 | 0 | 0 | 0 | 0 | 0 | 0 | 0 |
| Modulus of Elasticity | MPa | 2246 | 2200 | 2256 | 2196 | 2134 | 2270 | 2226 | 2178 | 2232 | 2180 | 2204 |
| Tensile Strength at Yield | MPa | 63.8 | 63.3 | 64.3 | 63 | 61.5 | 64.4 | 62.7 | 61.4 | 63.6 | 62.3 | 62.6 |
| Tensile Strength *at Break* | MPa | 51.5 | 49.5 | 51 | 50.2 | 48 | 59.2 | 54.1 | 52.1 | 54.1 | 54.6 | 53.4 |
| %Elonga tion at Yield | % | 6.19 | 6.14 | 6.21 | 6.13 | 6.1 | 6.39 | 6.2 | 6.13 | 6.31 | 6.22 | 6.29 |
| %Elonga tion at Break | % | 59.38 | 58.88 | 79.68 | 61.14 | 45.73 | 95.94 | 95.43 | 93.34 | 89.55 | 84.83 | 90.94 |

As shown in Table 3, incorporation of the poly(carbonate-siloxane) having 40 wt% siloxane content("PC-Si-40") resulted in improved low temperature impact resistance, as compared with compositions having the poly(carbonate-siloxane) having 20 wt% siloxane content ("PC-Si-20"), even though the siloxane content of the composition was the same (i.e., 4.4 wt%, compare Comparative Example 1 with Example 7). As the loading of PC-Si-40 is increased from 7 wt% to 15%, the heat resistance (i.e., HDT) is maintained while the low-temperature impact performance is improved (compare Examples 6-8). Formulations including PC-Si-40 with poly(N-phenylphenolphthaleinylbisphenol, 2,2-bis(4-hydro) carbonate -co-bisphenol A carbonate) ("HHPC-1") as the high-heat polycarbonate provided improved low-temperature impact resistance as compared to similar formulations with poly(bisphenol A carbonate-co-isophorone bisphenol carbonate) ("HHPC-2") as the high-heat polycarbonate (compare Examples 6-8 with Comparative Example 3-5). Examples 9-10 and Comparative Examples 4-5, wherein the loading of PC-Si-40 is the same, show that compositions having the HHPC-1 and HHPC-2 result in similar heat deflection values, but the low-temperature impact performance of compositions having HHPC-1 (Examples 9-10) is improved as compared with compositions having HHPC-2 (Comparative Examples 4-5). The loading of flame retardants is the same for Comparative Examples 1-5 and Examples 6-10. However, only those compositions having a combination of HHPC-1 as the high-heat polycarbonate and PC-Si-40 as the poly(carbonate-siloxane) provide the desired V0 UL94 rating at a 1.5 mm thickness. Example 11 shows that a V0 UL94 rating at a 1.2 mm thickness and V1 UL94 rating at a 1.0 mm thickness can be achieved for compositions having HHPC-1 and carbon black.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. If a term in the present application contradicts or conflicts with a term in a reference, the term from the present application takes precedence over the conflicting term from the reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A polycarbonate composition comprising
a high-heat copolycarbonate derived from a high-heat bisphenol monomer and optionally a low heat bisphenol A monomer, wherein the high-heat bisphenol monomer is a monomer where the corresponding homopolycarbonate of the monomer has a glass transition temperature of 155 °C or higher as determined per ASTM D3418 with a 20 °C per minute heating rate;
a poly(carbonate-siloxane) having 30-70 wt% siloxane content, based on the total weight of the poly(carbonate-siloxane);
a homopolycarbonate;
a flame retardant, wherein the flame retardant is not a phosphorous-containing flame retardant; and
optionally, an additive composition,
wherein a molded sample having a thickness of 3.2 millimeters has a notched Izod Impact of at least 300 joules per meter at -30 °C according to ASTM D256.

2. The polycarbonate composition of Claim 1, wherein a molded sample
having a thickness of 3.2 millimeters has a heat deflection temperature of at least 147 °C according to ASTM D648 at 0.45 megapascals, or
having a thickness of 3.2 millimeters has a heat deflection temperature of at least 133 °C according to ASTM D648 at 1.8 megapascals, or
having a 1.5 millimeter thickness has a UL-94 flame test rating of V0; or
having a thickness of 3.2 millimeters has a Notched Izod Impact of at least 200 joules per meter at -40 °C according to ASTM D256;
or a combination thereof.

3. The polycarbonate composition of Claim 1 or Claim 2,
20-50 wt% the high-heat copolycarbonate;
30-70 wt% of the homopolycarbonate;
0.01-1.0 wt% of the flame retardant; and
optionally, 0.1-10 wt% of the additive composition;
wherein the poly(carbonate-siloxane) is present in an amount effective to provide 0.5-20 wt% siloxane;
each based on the total weight of the composition.

4. The polycarbonate composition of any one of the preceding claims, wherein the homopolycarbonate comprises
a bisphenol A homopolycarbonate having a weight average molecular weight of 15,000 to 25,000 grams per mole, preferably 17,000 to 25,000 grams per mole;
a bisphenol A homopolycarbonate having a weight average molecular weight of 26,000 to 40,000 grams per mole, preferably 27,000 to 35,000 grams per mole;
or a combination thereof,
each as determined by gel permeation chromatography using polystyrene standards and calculated for polycarbonate.

5. The polycarbonate composition of any one of the preceding claims, wherein the flame retardant comprises an alkyl sulfonate, an aromatic sulfonate, an aromatic sulfone sulfonate, or a combination thereof.

6. The polycarbonate composition of any one of the preceding claims, wherein the high-heat bisphenol monomer comprises:
N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, and optionally, 1,1-bis(4-hydroxyphenyl)-3,3,5-trimethyl-cyclohexane,
preferably N-phenyl phenolphthalein bisphenol and 1,1-bis(4-hydroxyphenyl)-3,3,5-trimethyl-cyclohexane, more preferably N-phenyl phenolphthalein bisphenol.

7. The polycarbonate composition of any one of the preceding claims, wherein the high-heat polycarbonate is:
a high-heat polycarbonate derived from N-phenyl phenolphthalein bisphenol, or
a high-heat polycarbonate derived from N-phenyl phenolphthalein bisphenol and a high-heat polycarbonate derived from 1,1-bis(4-hydroxyphenyl)-3,3,5-trimethylcyclohexane.

8. The polycarbonate composition of any one of the preceding claims,
wherein a poly(carbonate-siloxane) having a siloxane content of less than 30 wt%, based on the total weight of the poly(carbonate-siloxane) is absent; or
wherein the composition further comprises a poly(carbonate-siloxane) having a siloxane content of less than 30 wt%.

9. The polycarbonate composition of any one of the preceding claims, wherein the additive composition is present and comprises an anti-drip agent, an epoxy resin, a hydrostabilizer, a processing aid, a heat stabilizer, an ultraviolet light stabilizer, a colorant, an inorganic filler, preferably a clay, or a combination thereof.

10. The polycarbonate composition of any one of the preceding claims, wherein the flame retardant comprises an alkyl sulfonate comprising potassium perfluorobutane sulfonate, potassium perfluoroctane sulfonate, and tetraethylammonium perfluorohexane sulfonate, or a combination thereof, and an aromatic sulfone sulfonate comprising potassium diphenylsulfone sulfonate.

11. The polycarbonate composition of any one of the preceding claims, further comprising a solid phosphorous-containing flame retardant.

12. The polycarbonate composition of any one of the preceding claims, wherein an impact modifier comprising high molecular weight elastomeric materials derived from olefins, monovinyl aromatic monomers, acrylic and methacrylic acids and their ester derivatives, and conjugated dienes is absent.

13. The polycarbonate composition of any one of the preceding claims comprising 25-50 wt% a high-heat copolycarbonate derived from N-phenyl phenolphthalein bisphenol and bisphenol A;
30-65 wt% of bisphenol A homopolycarbonate;
0.01-1.0 wt% of a combination of an alkyl sulfonate and an aromatic sulfone sulfonate; and
optionally, 0.1-10 wt% of the additive composition;
wherein the poly(carbonate-siloxane) is present in an amount effective to provide 0.5-20 wt% siloxane;
each based on the total weight of the composition.

14. An article of any one of the preceding claims, wherein the article is an extruded article, a molded article, pultruded article, a thermoformed article, a foamed article, a layer of a multi-layer article, a substrate for a coated article, or a substrate for a metallized article, preferably wherein the article is a molded article.

15. A method for forming the article of Claim 14, comprising molding, casting, or extruding the article.

## Patentansprüche

1. Polycarbonatzusammensetzung, umfassend ein hocherhitztes Copolycarbonat, abgeleitet von einem hocherhitzten Bisphenolmonomer und gegebenenfalls einem niedererhitzten Bisphenol-A-Monomer, wobei das hocherhitzte Bisphenolmonomer ein Monomer ist, bei dem das entsprechende Homopolycarbonat des Monomers eine Glasübergangstemperatur von 155° C oder höher aufweist, bestimmt nach ASTM D3418 mit einer Erhitzungsgeschwindigkeit von 20° C pro Minute; ein Poly(carbonat-siloxan) mit 30-70 Gew.-% Siloxangehalt, bezogen auf das Gesamtgewicht des Poly(carbonat-siloxans); ein Homopolycarbonat; ein Flammschutzmittel, wobei das Flammschutzmittel kein phosphorhaltiges Flammschutzmittel ist; und gegebenenfalls eine Additivzusammensetzung, wobei eine geformte Probe mit einer Dicke von 3.2 Millimetern eine gekerbte Izod
Schlagfestigkeit von mindestens 300 Joule pro Meter bei -30° C gemäß ASTM D256.

2. Polycarbonatzusammensetzung nach Anspruch 1, wobei eine geformte Probe mit einer Dicke von 3,2 Millimetern eine Wärmeformbeständigkeitstemperatur von mindestens 147° C gemäß ASTM D648 bei 0,45 Megapascal aufweist, oder mit einer Dicke von 3,2 Millimetern eine Wärmeformbeständigkeitstemperatur von mindestens 133° C gemäß ASTM D648 bei 1.8 Megapascal, oder mit einer Dicke von 1,5 Millimetern hat eine UL-94 Flammtest-Einstufung von VO; oder mit einer Dicke von 3,2 Millimetern hat eine Kerbschlagzähigkeit nach Izod von mindestens 200 Joule pro Meter bei -40° C gemäß ASTM D256; oder eine Kombination davon.

3. Polycarbonat-Zusammensetzung nach Anspruch 1 oder Anspruch 2,
20-50 Gew.-% des hocherhitzten Copolycarbonats;
30-70 Gew.-% des Homopolycarbonats;
0,01-1,0 Gew.-% des Flammschutzmittels; und gegebenenfalls 0,1-10 Gew.-% der Additivzusammensetzung; wobei das Poly(carbonat-siloxan) in einer Menge vorhanden ist, die wirksam ist, um 0,5-20 Gew.-% Siloxan bereitzustellen; jeweils bezogen auf das Gesamtgewicht der Zusammensetzung.

4. Polycarbonatzusammensetzung nach einem der vorhergehenden Ansprüche, wobei das Homopolycarbonat ein Bisphenol-A-Homopolycarbonat mit einem gewichtsmittleren Molekulargewicht von 15.000 bis 25.000 Gramm pro Mol, vorzugsweise 17.000 bis 25.000 Gramm pro Mol, umfasst ein Bisphenol-A-Homopolycarbonat mit einem gewichtsmittleren Molekulargewicht von 26.000 bis 40.000 Gramm pro Mol, vorzugsweise 27.000 bis 35.000 Gramm pro Mol; oder eine Kombination davon, jeweils bestimmt durch Gelpermeationschromatographie unter Verwendung von Polystyrolstandards und berechnet für Polycarbonat.

5. Die Polycarbonatzusammensetzung nach einem der vorhergehenden Ansprüche, wobei das Flammschutzmittel ein Alkylsulfonat, ein aromatisches Sulfonat, ein aromatisches Sulfonsulfonat oder eine Kombination davon umfasst.

6. Die Polycarbonatzusammensetzung nach einem der vorhergehenden Ansprüche, wobei das hocherhitzte Bisphenolmonomer umfasst:
N-Phenylphenolphthaleinbisphenol, 4,4'-(1-Phenylethyliden)-bisphenol, 4,4'-(3,3-Dimethyl-2,2-dihydro-1H-inden-1,1-diyl)-diphenol, 1,1-Bis(4-hydroxyphenyl)-cyclododecan, 3,8-Dihydroxy-5a,10b-diphenyl-cumarano-2',3',2,3-coumaran, oder eine Kombination davon, und gegebenenfalls 1,1-Bis(4-hydroxyphenyl)-3,3,5-trimethyl-cyclohexan, vorzugsweise N-Phenylphenolphthaleinbisphenol und 1,1-Bis(4-hydroxyphenyl)-3,3,5-trimethyl-cyclohexan, noch bevorzugter N-Phenylphenolphthaleinbisphenol.

7. Die Polycarbonatzusammensetzung nach einem der vorhergehenden Ansprüche, wobei das Hochtemperatur-Polycarbonat ist:
ein von N-Phenylphenolphthaleinbisphenol abgeleitetes Hochtemperaturpolycarbonat oder ein von N-Phenylphenolphthaleinbisphenol und einem von 1,1-Bis(4-hydroxyphenyl)-3,3,5-trimethyl-cyclohexan abgeleitetes Hochtemperaturpolycarbonat.

8. Polycarbonatzusammensetzung nach einem der vorhergehenden Ansprüche, wobei ein Poly(carbonat-siloxan) mit einem Siloxangehalt von weniger als 30 Gew.-%, bezogen auf das Gesamtgewicht des Poly(carbonat-siloxans), nicht vorhanden ist; oder wobei die Zusammensetzung ferner ein Poly(carbonat-siloxan) mit einem Siloxangehalt von weniger als 30 Gew.-% umfasst.

9. Die Polycarbonatzusammensetzung nach einem der vorhergehenden Ansprüche, wobei die Additivzusammensetzung vorhanden ist und ein Antitropfmittel, ein Epoxidharz, einen Hydrostabilisator, ein Verarbeitungshilfsmittel, einen Hitzestabilisator, einen Ultraviolettlichtstabilisator, ein Farbmittel, einen anorganischen Füllstoff, vorzugsweise einen Ton, oder eine Kombination davon umfasst.

10. Polycarbonatzusammensetzung nach einem der vorhergehenden Ansprüche, wobei das Flammschutzmittel ein Alkylsulfonat, das Kaliumperfluorbutansulfonat, Kaliumperfluoroctansulfonat und Tetraethylammoniumperfluorohexansulfonat oder eine Kombination davon umfasst, und ein aromatisches Sulfonsulfonat, das Kaliumdiphenylsulfonat umfasst, umfasst.

11. Die Polycarbonatzusammensetzung nach einem der vorhergehenden Ansprüche, die außerdem ein festes phosphorhaltiges Flammschutzmittel enthält.

12. Polycarbonatzusammensetzung nach einem der vorhergehenden Ansprüche, wobei ein Schlagzähigkeitsmodifikator fehlt, der hochmolekulare elastomere Materialien umfasst, die von Olefinen, monovinylaromatischen Monomeren, Acryl- und Methacrylsäuren und deren Esterderivaten sowie konjugierten Dienen abgeleitet sind.

13. Polycarbonatzusammensetzung nach einem der vorhergehenden Ansprüche, umfassend 25-50 Gew.-% eines Hochtemperatur-Copolycarbonats, abgeleitet von N-PhenylphenolphthaleinBisphenol und Bisphenol A; 30-65 Gew.-% Bisphenol-A-Homopolycarbonat;
0,01-1,0 Gew.-% einer Kombination aus einem Alkylsulfonat und einem aromatischen Sulfonsulfonat; und gegebenenfalls 0,1-10 Gew.-% der Additivzusammensetzung; wobei das Poly(carbonat-siloxan) in einer Menge vorhanden ist, die wirksam ist, um 0,5-20 Gew.-% Siloxan bereitzustellen; jeweils bezogen auf das Gesamtgewicht der Zusammensetzung.

14. Gegenstand nach einem der vorhergehenden Ansprüche, wobei der Gegenstand ein extrudierter Gegenstand, ein geformter Gegenstand, ein pultrudierter Gegenstand, ein thermogeformter Gegenstand, ein geschäumter Gegenstand, eine Schicht eines mehrschichtigen Gegenstands, ein Substrat für einen beschichteten Gegenstand oder ein Substrat für einen metallisierten Gegenstand ist, wobei der Gegenstand vorzugsweise ein geformter Gegenstand ist.

15. Verfahren zum Formen des Gegenstands nach Anspruch 14, umfassend das Formen, Gießen oder Extrudieren des Gegenstands.

## Revendications

1. Composition de polycarbonate comprenant
un copolycarbonate haute température dérivé d'un monomère de bisphénol haute température et, de façon facultative, d'un monomère de bisphénol A basse température, le monomère de bisphénol haute température étant un monomère dont l'homopolycarbonate correspondant a une température de transition vitreuse de 155 °C ou plus déterminée selon la norme ASTM D3418 avec une vitesse de chauffage de 20 °C par minute ;
un poly(carbonate-siloxane) ayant une teneur en siloxane de 30-70 % en poids, sur la base du poids total du poly(carbonate-siloxane) ;
un homopolycarbonate ;
un retardateur de flamme, lequel retardateur de flamme n'est pas un retardateur de flamme contenant du phosphore ; et
de façon facultative, une composition d'additifs,
où un échantillon moulé d'une épaisseur de 3,2 millimètres a un impact Izod d'éprouvettes entaillées d'au moins 300 joules par mètre à -30 °C selon la norme ASTM D256.

2. Composition de polycarbonate selon la revendication 1, dans laquelle un échantillon moulé
ayant une épaisseur de 3,2 millimètres a une température de fléchissement sous charge d'au moins 147 °C selon la norme ASTM D648 à 0,45 mégapascal, ou
ayant une épaisseur de 3,2 millimètres a une température de fléchissement sous charge d'au moins 133 °C selon la norme ASTM D648 à 1,8 mégapascals, ou
ayant une épaisseur de 1,5 millimètre a un classement V0 selon le test de flamme UL-94 ; ou
ayant une épaisseur de 3,2 millimètres a un impact Izod d'éprouvettes entaillées d'au moins 200 joules par mètre à - 40 °C selon la norme ASTM D256 ; ou
une combinaison de ces éléments.

3. Composition de polycarbonate selon la revendication 1 ou la revendication 2, 20-50 % en poids du copolycarbonate haute température ;
30-70 % en poids de l'homopolycarbonate ;
0,01-1,0 % en poids du retardateur de flamme ; et
de façon facultative, 0,1-10 % en poids de la composition d'additifs ;
le poly(carbonate-siloxane) étant présent dans une quantité suffisante pour fournir 0,5-20 % en poids de siloxane ;
chacun d'eux basé sur le poids total de la composition.

4. Composition de polycarbonate selon l'une quelconque des revendications précédentes, dans laquelle l'homopolycarbonate comprend
un homopolycarbonate de bisphénol A ayant une masse molaire moyenne de 15 000 à 25 000 grammes par mole, de préférence de 17 000 à 25 000 grammes par mole ;
un homopolycarbonate de bisphénol A ayant une masse molaire moyenne de 26 000 à 40 000 grammes par mole, de préférence de 27 000 à 35 000 grammes par mole ;
ou une combinaison de ceux-ci,
chacun étant déterminé par chromatographie à perméation de gel à l'aide de standards de polystyrène et calculé pour le polycarbonate.

5. Composition de polycarbonate selon l'une quelconque des revendications précédentes, dans laquelle le retardateur de flamme comprend un sulfonate d'alkyle, un sulfonate aromatique, un sulfonate de sulfone aromatique, ou une combinaison de ceux-ci.

6. Composition de polycarbonate selon l'une quelconque des revendications précédentes, dans laquelle le monomère de bisphénol haute température comprend :
N-phényl phénolphtaléine bisphénol, 4,4'-(1-phényléthylidène)bisphénol, 4,4'-(3,3-diméthyl-2,2-dihydro-1H-indène-1,1-diyl)diphénol, 1,1-bis(4-hydroxyphényl)cyclodo-décane, 3,8-dihydroxy-5a,10b-diphényl-coumarano-2',3',2,3-coumarane, ou une combinaison de ceux-ci et, de façon facultative, 1,1-bis(4-hydroxyphényl)-3,3,5-triméthyl-cyclohexane,
de préférence, N-phényl phénolphtaléine bisphénol et 1,1-bis(4-hydroxyphényl)-3,3,5-triméthyl-cyclohexane, plus préférentiellement N-phényl phénolphtaléine bisphénol.

7. Composition de polycarbonate selon l'une quelconque des revendications précédentes, dans laquelle le polycarbonate haute température est :
un polycarbonate haute température dérivé du N-phényl phénolphtaléine bisphénol, ou
un polycarbonate haute température dérivé du N-phényl phénolphtaléine bisphénol et un polycarbonate haute température dérivé du 1,1-bis(4-hydroxyphényl)-3,3,5-triméthylcyclohexane.

8. Composition de polycarbonate selon l'une quelconque des revendications précédentes,
dans laquelle un poly(carbonate-siloxane) ayant une teneur en siloxane inférieure à 30 % en poids, sur la base du poids total du poly(carbonate-siloxane), est absent ; ou
dans laquelle la composition comprend en outre un poly(carbonate-siloxane) ayant une teneur en siloxane inférieure à 30 % en poids.

9. Composition de polycarbonate selon l'une quelconque des revendications précédentes, dans laquelle la composition d'additifs est présente et comprend un agent anti-goutte, une résine époxy, un hydrostabilisant, un auxiliaire de traitement, un stabilisant thermique, un stabilisant contre la lumière ultraviolette, un colorant, une charge inorganique, de préférence une argile, ou une combinaison de ceux-ci.

10. Composition de polycarbonate selon l'une quelconque des revendications précédentes, dans laquelle le retardateur de flamme comprend un sulfonate d'alkyle comprenant le sulfonate de perfluorobutane de potassium, le sulfonate de perfluoroctane de potassium et le sulfonate de perfluorohexane de tétraéthylammonium, ou une combinaison de ceux-ci, et un sulfonate de sulfone aromatique comprenant le sulfonate de diphénylsulfone de potassium.

11. Composition de polycarbonate selon l'une quelconque des revendications précédentes, comprenant en outre un retardateur de flamme solide contenant du phosphore.

12. Composition de polycarbonate selon l'une quelconque des revendications précédentes, dans laquelle un modificateur d'impact comprenant des matériaux élastomères de poids moléculaire élevé dérivés d'oléfines, des monomères aromatiques monovinyliques, des acides acryliques et méthacryliques et leurs dérivés esters, et des diènes conjugués, est absent.

13. Composition de polycarbonate selon l'une quelconque des revendications précédentes comprenant
25-50 % en poids d'un copolycarbonate haute température dérivé du N-phényl phénolphtaléine bisphénol et du bisphénol A ;
30-65 % en poids d'homopolycarbonate de bisphénol A ;
0,01-1,0 % en poids d'une combinaison d'un sulfonate d'alkyle et d'un sulfonate de sulfone aromatique ; et
de façon facultative, 0,1-10 % en poids de la composition d'additifs ;
où le poly(carbonate-siloxane) est présent dans une quantité suffisante pour fournir 0,5-20 % en poids de siloxane,
chacun d'eux basé sur le poids total de la composition.

14. Article selon l'une quelconque des revendications précédentes, dans lequel l'article est un article extrudé, un article moulé, un article pultrudé, un article thermoformé, un article moussé, une couche d'un article multicouche, un substrat pour un article revêtu, ou un substrat pour un article métallisé, de préférence dans lequel l'article est un article moulé.

15. Procédé de formation de l'article selon la revendication 14, comprenant le moulage, le coulage ou l'extrusion de l'article.
